# EUROPÄISCHE PATENTSCHRIFT

(11) **EP 3 697 246 B1**
(45) Veröffentlichungstag und Bekanntmachung des Hinweises auf die Patenterteilung: **10.07.2024**
(21) Anmeldenummer: 19727370.9
(22) Anmeldetag: 28.05.2019
(51) Int. Cl.: A43B 5/12, A43B 3/24, A43B 13/36, A43B 13/14, A43B 1/00, A43B 13/16, A43B 23/08, B33Y 80/00

(54) **TANZSCHUH UND SET BESTEHEND AUS EINER SOHLE-KAPPE-EINHEIT UND EINEM OBERSCHUH**
DANCING SHOE AND KIT CONSISTING OF A SOLE/TOE UNIT AND AN UPPER SHOE
CHAUSSON DE DANSE ET ENSEMBLE CONSTITUÉ D'UNE UNITÉ SEMELLE-BOUT DE CHAUSSON ET D'UNE TIGE

(30) Priorität: 30.05.2018 DE 102018112942
(43) Veröffentlichungstag der Anmeldung: 26.08.2020
(73) Patentinhaber: act'ble GmbH, 76137 Karlsruhe (DE)
(72) Erfinder: LINDNER, Sophia, 75177 Pforzheim (DE)
(74) Vertreter: Schön, Thilo
(86) Internationale Anmeldenummer: PCT/EP2019/063769
(87) Internationale Veröffentlichungsnummer: WO 2019/229043

(56) Entgegenhaltungen:
- GB-A- 2 550 880
- US-A1- 2009 055 997
- US-A1- 2010 126 042
- US-A1- 2013 118 037

## Beschreibung

Die Erfindung betrifft einen Tanzschuh nach dem Oberbegriff des Anspruchs 1 eine Sohle-Kappe-Einheit nach Anspruch 13, einen Oberschuh nach Anspruch 14 und ein Set bestehend aus einer Sohle-Kappe-Einheit und einem Oberschuh nach Anspruch 15.

Tanzschuhe, insbesondere Spitzen-Tanzschuhe für den klassischen Balletttanz, sind schon seit sehr langer Zeit bekannt. Die Erfindung bezieht sich in besonderem Maße auf derartige Tanzschuhe, kann jedoch auf andere Arten von Tanzschuhen angewendet werden. Im Folgenden wird zunächst nur auf Spitzen-Tanzschuhe Bezug genommen.

Derartige Tanzschuhe - oft auch als Ballettschuhe bezeichnet - bestehen funktional betrachtet aus einer sich von einem hinteren Ende zu einem vorderen Ende erstreckenden Sohle, einer im Bereich des vorderen Endes der Sohle mit dieser verbundenen Zehenbox und einem mit Sohle und Zehenbox verbundenen textilen Oberschuh, zu welchem auch Bänder zum Schnüren gehören. Derartige Tanzschuhe werden bis heute überwiegend mit handwerklichen Methoden einzeln gefertigt und sind dementsprechend teuer. Dies fällt insbesondere deshalb ins Gewicht, da professionelle Tänzerinnen/Tänzer ein bis zwei Paar Ballettschuhe pro Tag verschleißen.

Ein weiteres Problem bei Ballettschuhen ist, dass sie von ihrer Benutzerin / ihrem Benutzer oft noch nachbearbeitet werden müssen, um sie überhaupt tragen zu können.

Schließlich ist es ein generelles Problem beim Balletttanz, insbesondere beim klassischen Balletttanz, dass die Belastung der Füße sehr hoch ist, was häufig zu einer dauerhaften Schädigung derselben führt.

Um die Innensohle eines Tanzschuhes flexibler zu machen, ist es beispielsweise aus der US 8,082,682 B2 bekannt, die Außenseite der Innensohle mit Einschnitten zu versehen, welche als quer zur Längserstreckung der Innensohle verlaufende Nuten ausgebildet sind.

Das Dokument US 2009/05597 A1 offenbart einen Schuh, welcher zumindest im Prinzip als Tanzschuh genutzt werden kann, nach dem Oberbegriff des Anspruchs 1.

Hiervon ausgehend stellt sich die vorliegende Erfindung die Aufgabe, einen Tanzschuh zur Verfügung zu stellen, welcher zumindest zu einer Verbesserung in Bezug auf das oben Beschriebene beiträgt.

Diese Aufgabe wird durch einen Tanzschuh mit den Merkmalen des Anspruchs 1 gelöst. Eine Sohle-Kappe-Einheit zur Verwendung in einem solchen Tanzschuh ist in Anspruch 13, ein Oberschuh zur Verwendung in einem solchen Tanzschuh ist in Anspruch 14 und ein Set bestehend aus einer Sohle oder einer Sohle-Kappe-Einheit und einem Oberschuh ist in Anspruch 15 angegeben.

Der Grundgedanke der Erfindung besteht darin, Sohle und Oberschuh getrennt voneinander derart auszubilden, dass sie nur im getragenen Zustand miteinander verbunden sind. Hierzu weist der Oberschuh einen Fußabschnitt mit einer Unterseite, welche wenigstens eine Aussparung aufweist, auf. Durch diese Aussparung erstrecken sich länglich ausgebildete Verbindungselemente, welche im getragenen Zustand des Tanzschuhs zumindest abschnittsweise in Einschnitten der Außenseite der Sohle aufgenommen sind. Vorzugsweise sind wenigstens zwei, insbesondere wenigstens vier solcher Verbindungselemente vorgesehen. Hierdurch ergibt sich im getragenen Zustand eine hinreichend feste Verbindung zwischen Sohle und Oberschuh, welche jedoch lösbar ist. Der Oberschuh besteht hierbei vorzugsweise zumindest abschnittsweise aus einem elastischen Material. Durch diesen Aufbau ergeben sich zahlreiche Vorteile:
Zum einen ist der Herstellungsprozess des Tanzschuhes schon dadurch vereinfacht, dass der Schritt des Verbindens von Sohle und Oberschuh entfällt.

Weiterhin kann der Oberschuh mit einer neuen Sohle weiterverwendet werden, wenn eine Sohle verschlissen ist.

Bevorzugt ist der Oberschuh strumpfartig ausgebildet und weist zusätzlich zum Fußabschnitt einen Beinabschnitt auf. Ein solcher strumpfartiger Aufbau des Oberschuhs ermöglicht es, diesen den anatomischen Bedürfnissen der Tänzerin / des Tänzers anzupassen, insbesondere dadurch, dass er Bereiche unterschiedlicher Elastizität und/oder Härte aufweist. Weiterhin ergibt sich ein insgesamt besserer Halt des Fußes, wodurch die Tänzerin / der Tänzer entlastet wird. Aus diesen Gründen ist ein erfindungsgemäßer Ballettschuh, dessen Oberschuh strumpfartig ausgebildet ist, insbesondere zum Einsatz im Training unbedingt zu bevorzugen. Bei Tanzvorführungen kann es aus optischen Gründen manchmal bevorzugt sein, einen Oberschuh ohne Beinabschnitt einzusetzen.

Wie erwähnt, ist gemäß der Erfindung ein Spitzentanz-Schuh, welcher weiterhin eine formstabile Zehenbox aufweist. Diese wird erfindungsgemäss dadurch gebildet, dass sich an die Sohle eine Kappe anschließt, wobei es bevorzugt ist, dass die Kappe integral mit der Sohle verbunden ist, so dass eine Sohle-Kappe-Einheit gebildet ist. In der Kappe der Zehenbox ist vorzugsweise eine Zehenschutz-Einlage angeordnet. Diese kann separat gefertigt werden, insbesondere derart, dass sie dem Vorderfuß der Tänzerin / des Tänzers angepasst ist.

Bevorzugte Ausführungsformen und weitere Vorteile ergeben sich aus den Unteransprüchen sowie aus dem nun mit Bezug auf die Figuren näher dargestellten Ausführungsbeispiel.

Die Erfindung wird nun anhand eines bevorzugten Ausführungsbeispiels mit Bezug auf die Figuren näher beschrieben. Hierbei zeigen:
- Figur 1: eine Sohle-Kappe-Einheit eines Tanzschuhs,
- Figur 2: die Sohle-Kappe-Einheit aus Figur 1 aus einem anderen Blickwinkel,
- Figur 3: einen Oberschuh zur Anordnung an der Sohle-Kappe-Einheit der Figuren 1 und 2,
- Figur 4: einen kompletten, getragenen Tanzschuh, welcher aus der SohleKappe-Einheit der Figuren 1 und 2, dem Oberschuh der Figur 3 und gegebenenfalls aus einer nicht dargestellten ZehenschutzEinlage besteht,
- Figur 5: einen schematisierten Schnitt durch die Sohle des Tanzschuhs der Figur 4,
- Figur 6: ein Detail des in Figur 5 Gezeigten in einer schematisierten perspektivischen Darstellung,
- Figur 7: eine Sohle-Kappe-Einheit und zwei an dieser angeordnete, sich überkreuzende Zugbänder und
- Figur 8: das in Figur 7 Gezeigte aus einem anderen Blickwinkel.

Die Erfindung wird nun anhand eines Ausführungsbeispiels eines erfindungsgemäßen Spitzentanz-Ballettschuhs näher beschrieben. Dieser weist eine Sohle 12, eine Kappe 18 und einen Oberschuh 20 auf. Sohle 12 und Kappe 18 sind integral ausgeführt und bilden die Sohle-Kappe-Einheit 10. In der Kappe ist in der Regel eine Zehenschutz-Einlage (nicht dargestellt) aufgenommen. Es sei schon an dieser Stelle erwähnt, dass in anderen Ausführungsformen der Erfindung, welche keine formstabile Zehenbox benötigen, ein erfindungsgemäßer Schuh auch aus Oberschuh und Sohle-Kappe-Einheit mit kleiner ausgebildeter Kappe bestehen kann.

Weiterhin könnte die Sohle an den Seiten etwas nach oben gezogen sein, sodass sie die Fußsohle des Tänzers / der Tänzerin etwas umgibt.

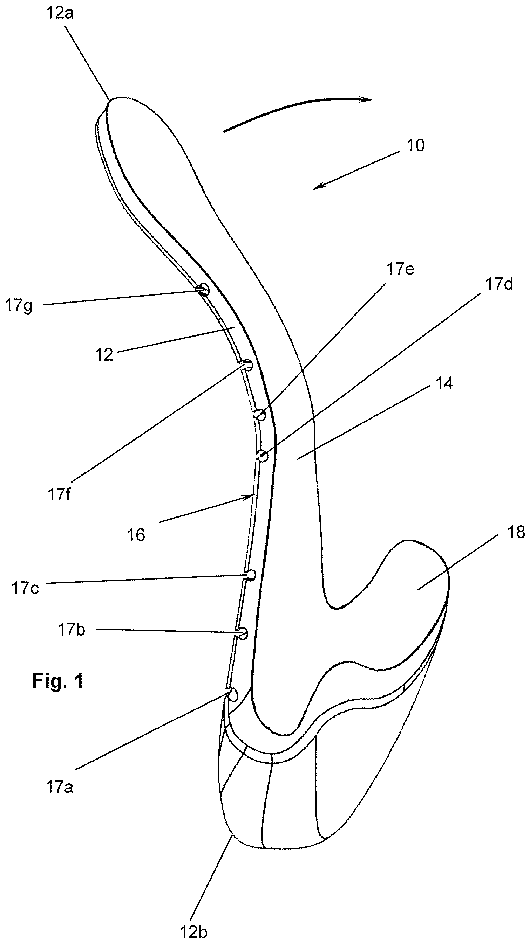

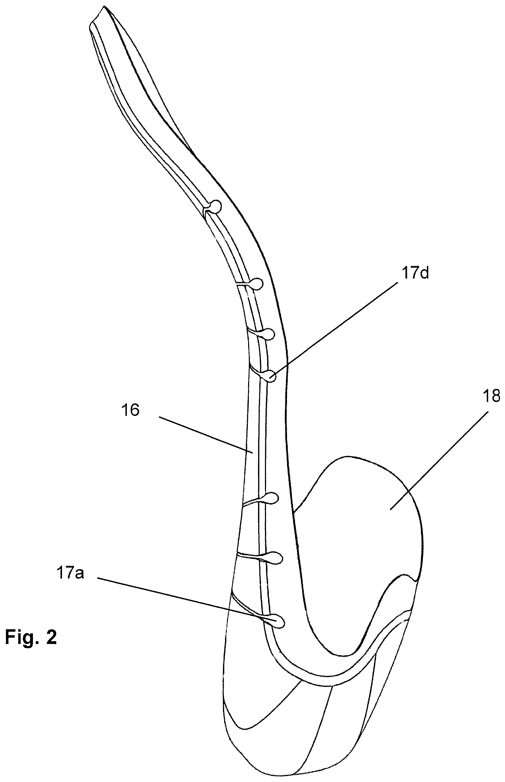

Das beschreibende Ausführungsbeispiel des erfindungsgemäßen Tanzschuhs besteht also aus wenigstens zwei Einzelelementen, nämlich einer Sohle-Kappe-Einheit 10 und einem Oberschuh 20. Wie erwähnt, ist gegebenenfalls noch eine nicht dargestellte Zehenschutz-Einlage innerhalb der Kappe der Sohle-Kappe-Einheit vorgesehen. Mit Bezug auf die Figuren 1 und 2 wird zunächst die Sohle-Kappe-Einheit 10 näher beschrieben:
Diese Sohle-Kappe-Einheit 10 weist zwei funktionale Abschnitte, nämlich die Sohle 12 und die Kappe 18 auf. Im beschriebenen bevorzugten Ausführungsbeispiel ist die Kappe 18 integral an der Sohle 12 angeformt, sodass die beiden Elemente in stoffschlüssiger Verbindung stehen. Die Sohle-Kappe-Einheit 10 kann ganz oder teilweise aus einem Kunststoff bestehen und kann beispielsweise im Spritzgussverfahren oder auch im 3D-Druckverfahren hergestellt sein. Sofern die Sohle-Kappe-Einheit teilweise aus einem Kunstsoff besteht, kann es häufig bevorzugt sein, Verstärkungen in Form von Fasern (beispielsweise Kohle- oder Glasfasern, aber auch Fasern aus einem Naturwerkstoff) integral in die Sohle-Kappe-Einheit einzuarbeiten. Sofern eine Orientierung der Fasern vorgenommen wird, so kann es je nach Anforderungsprofil sinnvoll sein, Fasern längs und/oder quer zur Längserstreckung der Sohle-Kappe-Einheit vorzusehen. Die Sohle-Kappe-Einheit 10 kann in Standardgrößen oder für eine Tänzerin / einen Tänzer individuell maßgeschneidert angefertigt werden. Geeignete Kunststoffe für die Sohle-Kappe-Einheit sind beispielsweise thermoplastisch verarbeitbare Elastomere (TPU), Thermoplastische Elastomere (TPE) und Polyamide (PA).

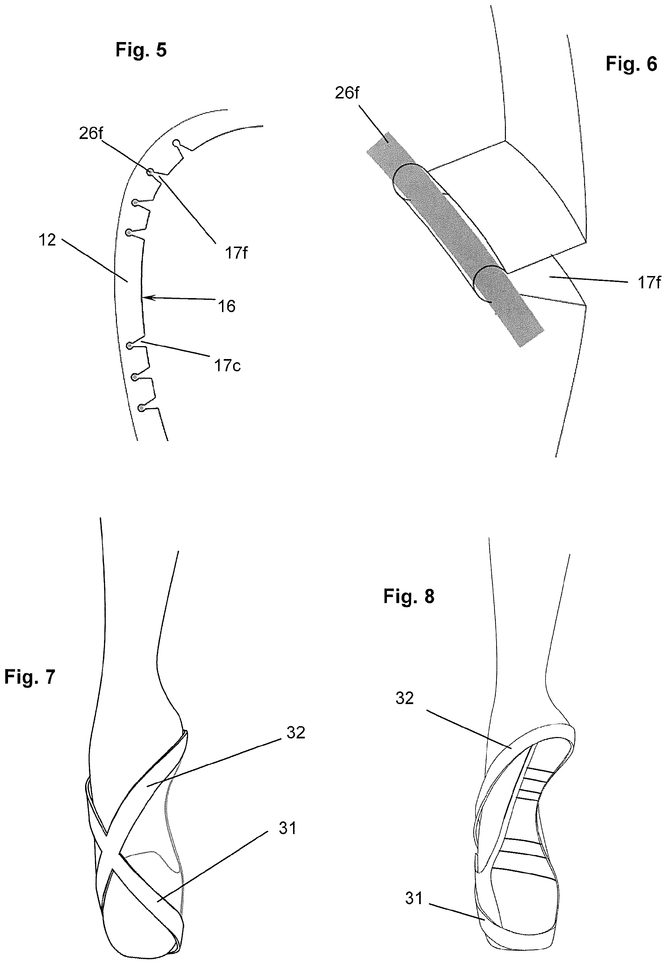

Die Sohle 12 erstreckt sich in Längsrichtung von einem hinteren Ende 12a zu einem vorderen Ende 12b und hat eine Innenseite 14 (also die im getragenen Zustand zur Fußsohle weisende Seite) und eine Außenseite 16. Die Außenseite 16 weist eine Mehrzahl von Einschnitten 17a - 17g auf, welche im gezeigten Ausführungsbeispiel als Nuten 17a - 17g ausgebildet sind, welche sich über die gesamte Breite der Sohle 12 erstrecken. Diese Nuten 17a - 17g erweitern sich an ihren inneren Enden, so dass sie im Wesentlichen schlüssellochförmig sind (s. hierzu auch Figuren 5 und 6). Es wird häufig zu bevorzugen sein, die Einschnitte in dieser Form auszubilden, jedoch sind auch andere Muster, Anordnungen oder Querschnittsformen denkbar. Es ist selbstverständlich, dass die Anzahl der Einschnitte nicht auf 7 beschränkt ist. Es können natürlich auch mehr oder weniger solcher Einschnitte vorgesehen sein. Je nach gewähltem Herstellungsverfahren kann die Anzahl, Position und Orientierung der hier als Nuten ausgebildeten Einschnitte auch auf den Fuß der Tänzerin / des Tänzers individualisiert werden. Die Nuten 17a bis 17g haben zwei Funktionen: Zum einen verleihen sie der Sohle 12 eine definierte Biegsamkeit. Diese definierte Biegsamkeit ist unidirektional: Die Sohle ist in Pfeilrichtung in Figur 1 relativ stark biegsam, da die Nuten aufgeweitet werden, während sie in der entgegengesetzten Richtung "blockiert", sobald die Nuten "geschlossen" sind. Zum anderen dienen die Nuten der Befestigung eines Oberschuhs, wie man später sehen wird. Hierbei ist zu beachten, dass nicht jede der Nuten auch zur Befestigung des Oberschuhs dienen muss. Im gezeigten Ausführungsbeispiel dient die Nut 17g nicht zur Befestigung des Oberschuhs.

In der Kappe kann zusätzlich eine Zehenschutz-Einlage aus einem weicheren Material wie beispielsweise Silikon angeordnet sein (nicht dargestellt). Diese kann dem Vorderfuß der Tänzerin / des Tänzers individuell angepasst sein.

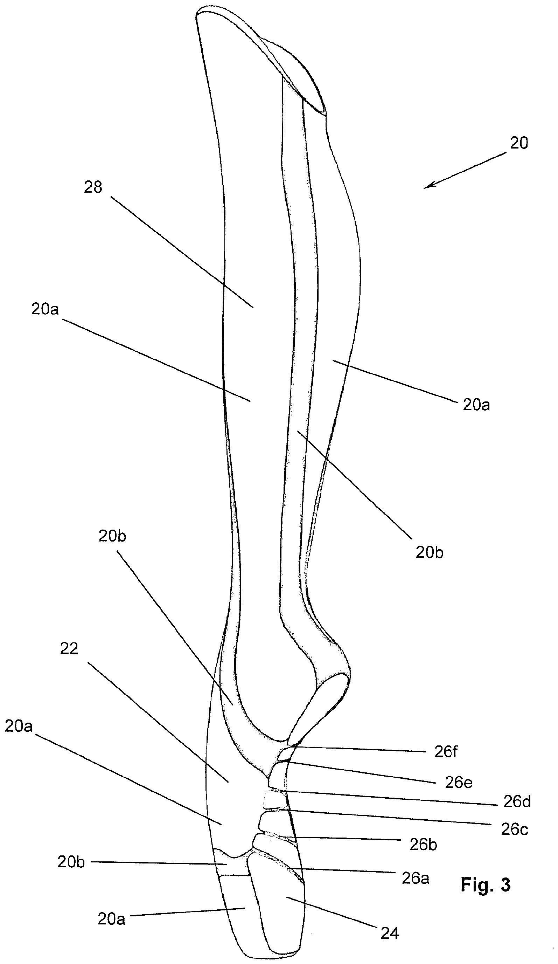

Der Oberschuh 20, welcher zur Anordnung an der eben beschriebenen Sohle-Kappe-Einheit vorgesehen ist, wird nun mit Bezug auf Figur 3 näher beschrieben:
Die Figur 3 zeigt einen Oberschuh 20, welcher zur Anordnung an der Sohle-Kappe-Einheit 10 vorgesehen ist. Der Oberschuh 20 des gezeigten Ausführungsbeispiels ist im Wesentlichen in Form eines Strumpfes ausgebildet und weist demnach einen Fußabschnitt 22 und einen Beinabschnitt 28 auf. Der Fußabschnitt 22 hat im Bereich seiner Sohle eine Aussparung 24, welche sich im gezeigten Ausführungsbeispiel im Wesentlichen über den gesamten Bereich der Sohle erstreckt, und durch welche sich im Wesentlichen quer zur Längsrichtung verlaufend stegförmige Verbindungselemente 26a bis 26f erstrecken. "Quer" muss hierbei nicht notwendigerweise "senkrecht" bedeuten, wie man dies auch in Figur 3 sehen kann. Häufig wird jedoch eine im Orientierung im Wesentlichen senkrecht zur Längsrichtung zu bevorzugen sein. Diese Verbindungselemente 26a bis 26f sind so angeordnet und dimensioniert, dass (wie man später sehen wird) diese sich nach Zusammensetzen des Tanzschuhs durch Nuten 17a bis 17f der Sohle 12 erstrecken.

Der Oberschuh 20 ist ein textiles Element, er kann beispielsweise ganz oder teilweise gestrickt, gehäkelt oder gewirkt sein. Der strumpfartige Oberschuh besteht vorzugsweise zumindest abschnittsweise aus einem elastischen Material, beispielsweise aus einer Mischung aus Baumwollfasern und Elastan. Andere geeignete Materialien sind beispielsweise Polyamid und Polyester.

Wie man der Figur 3 weiter entnehmen kann, weist der Oberschuh 20 erste Bereiche 20a und verstärkte Bereiche 20b auf. Hierbei haben die verstärken Bereiche 20b eine geringere Elastizität als die ersten Bereiche 20a. Die verstärken Bereiche 20b könnten separat gefertigt und dann mit einem Grundkörper des Oberschuhs 20, welcher zunächst nur aus einem ersten Bereich 20a besteht, verbunden werden. Es ist jedoch in der Regel bevorzugt, durch entsprechende Strick- oder Wirkverfahren erste Bereiche 20a und verstärkte Bereiche 20b unmittelbar einstückig, also integral, herzustellen. Zusätzlich kann noch verstärkendes Material aufgetragen werden. Entsprechende Techniken sind beispielsweise aus dem Bereich der Sportbekleidung bekannt. Die verstärken Bereiche 20b haben insbesondere den Sinn, an besonders belasteten Bereichen einen stärkeren Halt zu bieten und/oder bestimmte Muskelgruppen gezielt zu stützen oder anzuregen. Die verstärkten Bereiche können auch als Tape ausgebildet sein, welches die Muskulatur stimuliert. Es kann sinnvoll sein, die verstärkten Bereiche 20b auf der Innenseite mit Silikon zu beschichten, damit sie an der Haut haften.

Wie gezeigt, ist es bevorzugt, dass sich wenigstens ein verstärkter Bereich 20b über den Vorderfuß erstreckt und dass sich wenigstens ein verstärkter Bereich 20b beginnend vom Rand der Aussparung 24 bis zum oberen Ende des Beinabschnittes 28 erstreckt (sofern ein solcher, wie im dargestellten Ausführungsbeispiel, vorhanden ist). Es ist besonders bevorzugt, dass der Beinabschnitt 28 so lange ausgebildet ist, dass er sich im getragenen Zustand um die gesamte Wade der Tänzerin / des Tänzers erstreckt.

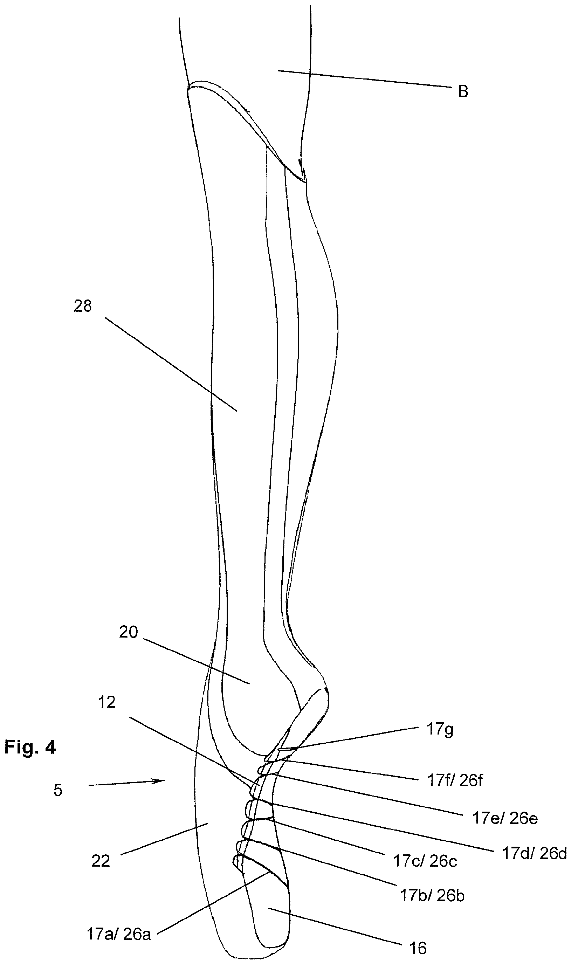

Die Figur 4 zeigt den aus der Sohle-Kappe-Einheit 10 und dem Oberschuh 20 gebildeten Tanzschuh 5, welcher von einer Tänzerin beziehungsweise einem Tänzer getragen wird. Das Anziehen dieses Tanzschuhs 5 geschieht wie folgt:
Zunächst wird die Sohle-Kappe-Einheit 10 derart an den Fuß angelegt, dass sich die Zehen der Tänzerin / des Tänzers in der Kappe 18 befinden und die Innenseite 14 der Sohle an der Fußsohle anliegt. Danach wird der Oberschuh 20 nach Art eines Strumpfes über den Fuß und die Sohle-Kappe-Einheit gezogen, wobei der "Endzustand" in der Regel dann erreicht ist, wenn der Beinabschnitt 28 bis über die Wade gezogen ist. Sofern sie nicht von selbst hineinrutschen, müssen die Verbindungselemente 26a bis 26f gegebenenfalls noch per Hand in ihre vorgesehenen Nuten 17a bis 17g gelegt werden (s. hierzu auch Figuren 5 und 6). Die oben beschriebene Querschnittsform der Nuten verbessert den Halt der Verbindungselemente in den Nuten. In diesem Zustand kann der Tanzschuh 5 dann unmittelbar benutzt werden. Ein weiteres Anlegen von Schnüren oder dergleichen, wie dies bei traditionellen Ballettschuhen notwendig ist, erfolgt im bisher beschriebenen Ausführungsbeispiel nicht, es ist jedoch möglich, zur weiteren Stabilisierung des Fußes zusätzliche Schnürungen oder Bänder vorzusehen. Beispielsweise kann, wie dies in den Figuren 7 und 8 dargestellt ist, eine Art "Kreuzband" mit zwei Zugbändern vorgesehen sein:
Dieses Kreuzband weist zwei Bänder 31, 32 auf, wobei sich das erste Zugband 31 von der linken Vorderfußseite zur rechten Fersenseite und das zweite Zugband 32 von der rechten Vorderfußseite zur linken Fersenseite erstreckt. Somit erstreckt sich jedes Band 31, 32 von einem vorderen Ende zu einem hinteren Ende. Hierbei laufen die beiden Bänder über den Spann, so dass sie sich dort überkreuzen. Die Bänder 31, 32 können Abschnitte eins einstückigen Elements sein (wie dargestellt) oder sie können als einzelne Bänder ausgeführt sein. Im Falle einer einstückigen Ausführung bildet der einstückige Zuschnitt vorzugsweise eine geschlossene "8" (s. Figur 8), das heißt, dass die vorderen und hinteren Enden der Zugbänder ineinander übergehen. Vorzugsweise sind die Bänder 31, 32 mit der Sohle-Kappe-Einheit 10 verbunden, nämlich am vorderen und am hinteren Ende der Sohle-Kappe-Einheit 10. Da die beiden Bänder im getragenen Zustand unter Zugspannung stehen sollten, bestehen sie vorzugsweise aus einem unelastischen Material. Weiterhin ist es bevorzugt, dass zumindest eine der beiden Verbindungen nicht dauerhaft ist, sodass die Zugspannung eingestellt werden kann. Hierzu eignet sich beispielsweise ein Klettverschluss. Nach Anlegen des Oberschuhs befinden sich die beiden Bänder 31, 32 zumindest abschnittsweise, in der Regel vollständig, zwischen Sohle-Kappe-Einheit 10 und Oberschuh. Im getragenen und korrekt eingestellten Zustand entsteht durch das Kreuzband eine Kompression, wenn sich der Spann des Fußes im Spitzenstand gegen das Kreuzband drückt. Hierdurch wird die Durchbiegung der Sohle zusätzlich begrenzt, was der Tänzerin/ dem Tänzer zusätzlichen Halt verleiht.

Zusätzlich oder alternativ können noch in den Oberschuh integrierte Schnürungen vorgesehen sein oder das Kreuzband könnte in den Oberschuh integriert sein (nicht dargestellt).

Insbesondere die Sohle-Kappe-Einheit und eine eventuell vorgesehene Zehenschutz-Einlage eignen sich für eine auf die Tänzerin / den Tänzer individualisierte Herstellung. Hierzu können die Füße mit einem 3D-Scanner gescannt und die oben beschriebenen Bauteile gemäß dem hierbei erhaltenen Datensatz erzeugt werden.

### Bezugszeichenliste

- 5: Tanzschuh
- 10: Sohle-Kappe-Einheit
- 12: Sohle
- 12a: hinteres Ende
- 12b: vorderes Ende
- 14: Innenseite
- 16: Außenseite
- 17a-g: Nut
- 18: Kappe
- 20: Oberschuh
- 20a: erster Bereich
- 20b: verstärkter Bereich
- 22: Fußabschnitt
- 24: Aussparung
- 26a-f: Verbindungselement
- 28: Beinabschnitt
- 31: erstes Zugband
- 32: zweites Zugband
- B: Bein

## Patentansprüche

1. Tanzschuh (5) mit einer eine Innenseite (14) und eine Außenseite (16) aufweisende, sich in einer Längsrichtung von einem hinteren Ende (12a) zu einem vorderen Ende (12b) ersteckenden Sohle (12) und einem Oberschuh (20), welcher einen Fußabschnitt (22) aufweist,
wobei
die Außenseite (16) der Sohle (12) eine Mehrzahl von Einschnitten (17ag) aufweist,
der Fußabschnitt (22) an seiner Unterseite wenigstens eine Aussparung (24) aufweist, durch welche sich länglich ausgebildete Verbindungselemente (26a-f) erstrecken, welche im getragenen Zustand des Tanzschuhs (5) zumindest abschnittsweise in Einschnitten (17a-f) der Außenseite (16) der Sohle (12) aufgenommen sind,
**dadurch gekennzeichnet, dass** der Tanzschuh weiterhin eine mit der Sohle (12) verbundene Kappe (18) aufweist, wobei die Kappe (18) dauerhaft mit der Sohle (12) verbunden ist, sodass Kappe (18) und Sohle (12) eine Sohle-Kappe-Einheit (10) bilden.

2. Tanzschuh (5) nach Anspruch 1, **dadurch gekennzeichnet, dass** die Kappe (18) integral mit der Sohle (12) ausgebildet ist.

3. Tanzschuh (5) nach Anspruch 1 oder Anspruch 2, **dadurch gekennzeichnet, dass** der Oberschuh (20) strumpfartig ausgebildet ist und zusätzlich zum Fußabschnitt einen sich vom Fußabschnitt (22) erstreckenden Beinabschnitt (28) aufweist, wobei die Unterseite des Fußabschnitts (22) dem Beinabschnitt (28) gegenüberliegt und wobei der Beinabschnitt (28) des Oberschuhs (20) vorzugsweise wenigstens eine Länge von 15 cm aufweist und sich der Beinabschnitt (28) des getragenen Tanzschuhs weiter vorzugsweise entlang der gesamten Wade der Tänzerin / des Tänzers erstreckt.

4. Tanzschuh (5) nach einem der vorangehenden Ansprüche, **dadurch gekennzeichnet, dass** jedes Verbindungselement (26a-f) in genau einem Einschnitt (17a-f) aufgenommen ist.

5. Tanzschuh (5) nach einem der vorangehenden Ansprüche, **dadurch gekennzeichnet, dass** die Einschnitte (17a-g) als sich quer zur Längsrichtung erstreckende Nuten (17a-g) ausgebildet sind, welche vorzugsweise ein inneres Ende mit einem vergrößerten Querschnitt aufweisen, wobei sich die Nuten (17a-g) vorzugsweise jeweils über die gesamte Breite der Sohle (12) erstrecken.

6. Tanzschuh (5) nach einem der vorangehenden Ansprüche, **dadurch gekennzeichnet, dass** der Oberschuh (20) aus einem textilen Werkstoff besteht und insbesondere gestrickt oder gewirkt ist.

7. Tanzschuh (5) nach einem der vorangehenden Ansprüche, **dadurch gekennzeichnet, dass** der Oberschuh (20) wenigstens einen ersten Bereich (20a) und wenigstens einen gegenüber dem wenigstens einen ersten Bereich (20a) verstärkten Bereich (20b) aufweist,
wobei vorzugsweise
wenigstens ein verstärkter Bereich (20b) im getragenen Zustand den Vorderfuß der Trägerin / des Trägers überspannt,
und/oder.
der Tanzschuh nach Anspruch 3 ausgebildet ist und sich wenigstens ein verstärkter Bereich (20b) im getragenen Zustand entlang der Wade der Trägerin / des Trägers erstreckt.

8. Tanzschuh (5) nach einem der vorangehenden Ansprüche, **dadurch gekennzeichnet, dass** der Oberschuh (20) zumindest abschnittsweise elastisch ist.

9. Tanzschuh (5) nach einem der vorangehenden Ansprüche, **dadurch gekennzeichnet, dass** die Sohle (12) aus einem faserverstärkten Kunststoff besteht.

10. Tanzschuh (5) nach Anspruch 9, **dadurch gekennzeichnet, dass** zumindest ein Teil der Fasern des faserverstärkten Kunststoffs in einer vorgegebenen Richtung orientiert ist, wobei es bevorzugt ist, dass zumindest ein Teil der Fasern in Längsrichtung der Sohle (12) orientiert ist oder dass zumindest ein Teil der Fasern in Querrichtung der Sohle (12) orientiert ist.

11. Tanzschuh (5) nach einem der vorangehenden Ansprüche, **dadurch gekennzeichnet, dass** er weiterhin ein sich vom vorderen linken Endbereich zum hinteren rechten Endbereich des Tanzschuhs erstreckendes erstes Zugband (31) und ein sich vom vorderen rechten Endbereich zum hinteren linken Endbereich des Tanzschuhs erstreckendes zweites Zugband (32) derart aufweist, dass sich die beiden Zugbänder im getragenen Zustand über dem Spann des Fußes überkreuzen,
wobei es bevorzugt ist,
dass die Enden der Zugbänder (31, 32) mit der Sohle verbunden oder verbindbar sind, und/ oder
dass die Zugbänder (31, 32) Teile eines einstückigen Zugelements sind, welches vorzugsweise in Form einer acht ausgebildet ist. und/ oder
die Zugbänder (31, 32) zumindest abschnittsweise zwischen Sohle (12) und Oberschuh (20) angeordnet sind.

12. Tanzschuh (5) nach einem der vor, **dadurch gekennzeichnet, dass** in der Kappe (18) eine Zehenschutzeinlage, insbesondere aus Silikon angeordnet ist.

13. Sohle-Kappe-Einheit (10) zur Verwendung in einem Tanzschuh (5) nach einem der Ansprüche 1 bis 12, wobei
die Sohle-Kappe-Einheit (10) eine eine Innenseite (14) und eine Außenseite (16) aufweisende, sich in einer Längsrichtung von einem hinteren Ende (12a) zu einem vorderen Ende (12b) ersteckenden Sohle (12) und eine dauerhaft mit der Sohle (18) verbundene Kappe (18) aufweist,
die Außenseite (16) der Sohle (12) eine Mehrzahl von Einschnitten (17ag) zur Aufnahme von länglich ausgebildeten Verbindungselementen eines Oberschuhs aufweist, und
die Einschnitte (17a-g) als sich quer zur Längsrichtung erstreckende Nuten (17a-g) ausgebildet sind, welche ein inneres Ende mit einem vergrößerten Querschnitt aufweisen, wobei sich die Nuten (17a-g) jeweils über die gesamte Breite der Sohle (12) erstrecken.

14. Oberschuh (20) zur Verwendung mit einer Sohle-Kappe-Einheit nach Anspruch 13 zur Bildung eines Tanzschuhs (5) , wobei der Oberschuh einen Fußabschnitt (22) aufweist, wobei
der Fußabschnitt (22) an seiner Unterseite wenigstens eine Aussparung (24) aufweist, durch welche sich länglich ausgebildete Verbindungselemente (26a-f) erstrecken, welche dafür vorgesehen sind, im getragenen Zustand des Tanzschuhs (5) zumindest abschnittsweise in den querverlaufenden Nuten (17a-f) der Außenseite (16) der Sohle (12) der Sohle-Kappe-Einheit aufgenommen zu sein.

15. Set bestehend aus einer Sohle-Kappe-Einheit (10) nach Anspruch 13 und einem Oberschuh (20) nach Anspruch 14 zur Bildung eines Tanzschuhs (5).

## Claims

1. Dance shoe (5) comprising a sole (12) having an inner side (14) and an outer side (16) and extending in a longitudinal direction from a rear end (12a) to a front end (12b), and an upper shoe (20) having a foot section (22),
wherein
the outer side (16) of the sole (12) comprises a plurality of incisions (17a-g),
the foot section (22) has at least one recess (24) on its underside, through which elongated connecting elements (26a-f) extend which, when the dance shoe (5) is worn, are received at least in sections in incisions (17a-f) in the outer side (16) of the sole (12),
**characterised in that** the dance shoe further comprises a cap (18) connected to the sole (12), the cap (18) being permanently connected to the sole (12) so that the cap (18) and sole (12) form a sole-cap-unit (10).

2. Dance shoe (5) according to claim 1, **characterised in that** the cap (18) is integrally formed with the sole (12).

3. Dance shoe (5) according to claim 1 or claim 2, **characterised in that** the upper shoe (20) has the form of a stocking and comprises, in addition to the foot section, a leg section (28) extending from the foot section (22), wherein the underside of the foot section (22) is opposite the leg section (28) and wherein the leg section (28) of the upper shoe (20) has preferably a length of at least 15 cm and the leg section (28) of the worn dance shoe extends further preferably along the entire calf of the dancer.

4. Dance shoe (5) according to one of the preceding claims, **characterised in that** each connecting element (26a-f) is accommodated in exactly one incision (17a-f).

5. Dance shoe (5) according to one of the preceding claims, **characterised in that** the incisions (17a-g) are formed as grooves (17a-g) extending transversely to the longitudinal direction, said grooves preferably comprising an inner end with an enlarged cross-section, wherein the grooves (17a-g) preferably each extend over the entire width of the sole (12).

6. Dance shoe (5) according to one of the preceding claims, **characterised in that** the upper shoe (20) consists of a textile material and, in particular, is knitted or warp-knitted.

7. Dance shoe (5) according to one of the preceding claims, **characterised in that** the upper shoe (20) has at least one first region (20a) and at least one region (20b) that is reinforced with respect to the at least one first region (20a),
wherein preferably
at least one reinforced region (20b) spans the forefoot of the wearer in the worn state,
and/or.
the dance shoe is constructed according to claim 3 and at least one reinforced region (20b) extends along the calf of the wearer when worn.

8. Dance shoe (5) according to one of the preceding claims, **characterised in that** the upper shoe (20) is elastic at least in sections.

9. Dance shoe (5) according to one of the preceding claims, **characterised in that** the sole (12) consists of a fibre-reinforced plastic.

10. Dance shoe (5) according to claim 9, **characterised in that** at least some of the fibres of the fibre-reinforced plastic are oriented in a predetermined direction, wherein it is preferred that at least some of the fibres are oriented in the longitudinal direction of the sole (12) or that at least some of the fibres are oriented in the transverse direction of the sole (12).

11. Dance shoe (5) according to one of the preceding claims, **characterised in that** it further comprises a tie strap (31) extending from the front left end region to the rear right end region of the dance shoe and a second tie strap (32) extending from the front right end region to the rear left end region of the dance shoe in such a way that the two tie straps cross over the instep of the foot when worn,
wherein it is preferred
that the ends of the tie straps (31, 32) are connected or connectable to the sole, and/or
that the tie straps (31, 32) are parts of a one-piece tension element, which is preferably designed in the form of an eight and/or
the tie straps (31, 32) are arranged at least in sections between the sole (12) and the upper shoe (20).

12. Dance shoe (5) according to one of the preceding, **characterised in that** a toe protection insert, in particular made of silicone, is arranged in the cap (18).

13. Sole-cap-unit (10) for use in a dance shoe (5) according to one of claims 1 to 12, wherein
the sole-cap-unit (10) comprises a sole (12) having an inner side (14) and an outer side (16) and extending in a longitudinal direction from a rear end (12a) to a front end (12b), and a cap (18) permanently connected to the sole (18),
the outer side (16) of the sole (12) comprises a plurality of incisions (17a-g) for receiving elongated connecting elements of an upper shoe, and
the incisions (17a-g) are formed as grooves (17a-g) extending transversely to the longitudinal direction, said grooves comprising an inner end with an enlarged cross-section, wherein the grooves (17a-g) each extend over the entire width of the sole (12).

14. Upper shoe (20) for use with a sole-cap-unit according to claim 13 for forming a dance shoe (5), wherein the upper shoe comprises a foot section (22), wherein
the foot section (22) has at least one recess (24) on its underside, through which elongated connecting elements (26a-f) extend which are intended to be received at least in sections in the transverse grooves (17a-f) of the outer side (16) of the sole (12) of the sole-cap-unit when the dance shoe (5) is worn.

15. Set comprising a sole-cap-unit (10) according to claim 13 and an upper shoe (20) according to claim 14 for forming a dance shoe (5).

## Revendications

1. Chaussure de danse (5) avec une semelle (12) présentant un côté intérieur (14) et un côté extérieur (16) s'étendant dans une direction longitudinale d'une extrémité arrière (12a) à une extrémité avant (12b), et une tige (20) qui présente une section de pied (22),
dans laquelle
le côté extérieur (16) de la semelle (12) présente une pluralité d'entailles (17a-g),
la section de pied (22) présente sur son côté inférieur au moins un évidement (24), à travers lequel s'étendent des éléments de liaison (26a-f) de forme allongée qui, à l'état porté de la chaussure de danse (5), sont reçus au moins par sections dans des entailles (17a-f) du côté extérieur (16) de la semelle (12),
**caractérisée en ce que** la chaussure de danse présente en outre un bout (18) relié à la semelle (12), dans laquelle le bout (18) est relié de manière permanente à la semelle (12), de sorte que le bout (18) et la semelle (12) forment une unité semelle-bout (10).

2. Chaussure de danse (5) selon la revendication 1, **caractérisée en ce que** le bout (18) est formé d'un seul tenant avec la semelle (12).

3. Chaussure de danse (5) selon la revendication 1 ou la revendication 2, **caractérisée en ce que** la tige (20) est en conçue forme de bas et présente, en plus de la section de pied, une section de jambe (28) s'étendant depuis la section de pied (22), dans laquelle le côté inférieur de la section de pied (22) est opposé à la section de jambe (28) et dans laquelle la section de jambe (28) de la tige (20) présente de préférence une longueur d'au moins 15 cm et la section de jambe (28) de la chaussure de danse portée s'étend en outre de préférence sur toute la longueur du mollet de la danseuse/du danseur.

4. Chaussure de danse (5) selon l'une quelconque des revendications précédentes, **caractérisée en ce que** chaque élément de liaison (26a-f) est reçu dans exactement une entaille (17a-f).

5. Chaussure de danse (5) selon l'une quelconque des revendications précédentes, **caractérisée en ce que** les entailles (17a-g) sont conçues sous forme de rainures (17a-g) s'étendant transversalement à la direction longitudinale qui présentent de préférence une extrémité intérieure avec une section transversale agrandie, dans laquelle les rainures (17a-g) s'étendent de préférence respectivement sur toute la largeur de la semelle (12).

6. Chaussure de danse (5) selon l'une quelconque des revendications précédentes, **caractérisée en ce que** la tige (20) est constituée d'un matériau textile et est en particulier tricoté ou maillée.

7. Chaussure de danse (5) selon l'une quelconque des revendications précédentes, **caractérisée en ce que** la tige (20) présente au moins une première zone (20a) et au moins une zone renforcée (20b) par rapport à l'au moins une première zone (20a),
dans laquelle de préférence
au moins une zone renforcée (20b) recouvre l'avant-pied de la porteuse/du porteur à l'état porté, et/ou
la chaussure de danse est conçue selon la revendication 3 et au moins une zone renforcée (20b) s'étend le long du mollet du porteur/de la porteuse à l'état porté.

8. Chaussure de danse (5) selon l'une quelconque des revendications précédentes, **caractérisée en ce que** la tige (20) est élastique au moins par sections.

9. Chaussure de danse (5) selon l'une quelconque des revendications précédentes, **caractérisée en ce que** la semelle (12) est constituée de matière plastique renforcée de fibres.

10. Chaussure de danse (5) selon la revendication 9, **caractérisée en ce qu'**au moins une partie des fibres de la matière plastique renforcée de fibres est orientée dans une direction prédéterminée, dans laquelle de préférence au moins une partie des fibres est orientée dans la direction longitudinale de la semelle (12) ou au moins une partie des fibres est orientée dans la direction transversale de la semelle (12).

11. Chaussure de danse (5) selon l'une quelconque des revendications précédentes, **caractérisée en ce qu'**elle présente en outre une première bande de traction (31) s'étendant de la zone d'extrémité avant gauche à la zone d'extrémité arrière droite de la chaussure de danse et une seconde bande de traction (32) s'étendant de la zone d'extrémité avant droite à la zone d'extrémité arrière gauche de la chaussure de danse, de sorte que les deux bandes de traction se croisent au-dessus du cou-de-pied à l'état porté,
dans laquelle, de préférence,
les extrémités des bandes de traction (31, 32) sont reliées ou peuvent être reliées à la semelle, et/ou
les bandes de traction (31, 32) sont des parties d'un élément de traction d'un seul tenant qui est de préférence conçu sous forme d'un huit, et/ou les bandes de traction (31, 32) sont disposées au moins par sections entre la semelle (12) et la tige (20).

12. Chaussure de danse (5) selon l'une quelconque des revendications précédentes, **caractérisée en ce qu'**une garniture de protection des orteils, en particulier en silicone, est disposée dans le bout (18).

13. Unité semelle-bout (10) destinée à être utilisée dans une chaussure de danse (5) selon l'une quelconque des revendications 1 à 12, dans laquelle
l'unité semelle-bout (10) présente une semelle (12) présentant un côté intérieur (14) et un côté extérieur (16) s'étendant dans une direction longitudinale d'une extrémité arrière (12a) à une extrémité avant (12b), et un bout (18) relié de manière permanente à la semelle (18),
le côté extérieur (16) de la semelle (12) présente une pluralité d'entailles (17a-g) pour recevoir des éléments de liaison de forme allongée d'une tige, et
les entailles (17a-g) sont formées en tant que rainures (17a-g) s'étendant transversalement à la direction longitudinale, qui présentent une extrémité intérieure avec une section transversale agrandie, dans laquelle les rainures (17a-g) s'étendent respectivement sur toute la largeur de la semelle (12).

14. Tige (20) destinée à être utilisée avec une unité semelle-bout selon la revendication 13 pour former une chaussure de danse (5), dans laquelle la tige présente une section de pied (22), dans laquelle
la section de pied (22) présente sur son côté inférieur au moins un évidement (24) à travers lequel s'étendent des éléments de liaison (26a-f) de forme allongée qui sont prévus pour être reçus, à l'état porté de la chaussure de danse (5), au moins par sections dans les rainures transversales (17a-f) du côté extérieur (16) de la semelle (12) de l'unité semelle-bout.

15. Ensemble constitué d'une unité semelle-bout (10) selon la revendication 13 et d'une tige (20) selon la revendication 14 pour former une chaussure de danse (5).
